# EUROPÄISCHE PATENTANMELDUNG

(11) **EP 2 236 888 A2**
(43) Veröffentlichungstag der Anmeldung: **06.10.2010**
(21) Anmeldenummer: 10001719.3
(22) Anmeldetag: 19.02.2010
(51) Int. Cl.: F16L 11/08

(54) **Schlauch zur Förderung von mit Druck beaufschlagten Medien**

(30) Priorität: 02.04.2009 DE 102009015985
(71) Anmelder: VERITAS AG, 63571 Gelnhausen (DE)
(72) Erfinder: Hannemann, Rainer, 98587 Steinbach-Hallenberg (DE); Storch, Torsten, 98590 Schwallungen (DE)
(74) Vertreter: Grünecker, Kinkeldey, Stockmair & Schwanhäusser Anwaltssozietät

(57) **Zusammenfassung**

Die Erfindung betrifft einen Schlauch zur Förderung von mit Druck beaufschlagten Medien. Es ist die Aufgabe der vorliegenden Erfindung, einen Hochdruckschlauch weiterzuentwickeln, der unter den üblichen Betriebszuständen eine größere Lebensdauer aufweist als herkömmliche Hochdruckschläuche. Zur Lösung dieser Aufgabe stellt die Erfindung einen Schlauch (1) zur Förderung von mit Druck beaufschlagten Medien bereit, der aus einem textilen Druckträger (2) und einem Schlauchprofil (3) mit zumindest einer entlang einer Schlauchachse verlaufenden Rinne (42) zur abschnittsweisen Aufnahme des textilen Druckträgers (2) hergestellt ist. Ebenfalls bereit gestellt werden eine Vorrichtung zur Herstellung eines solchen Schlauchprofils sowie ein Bausatz und ein Verfahren zur Herstellung eines Schlauchs zur Förderung von mit Druck beaufschlagten Medien.

## Beschreibung

Die Erfindung betrifft einen Schlauch zur Förderung von mit Druck beaufschlagten Medien.

Ein solcher Schlauch, der auch als Hochdruckschlauch bezeichnet wird, findet beispielsweise als Ladeluftschlauch im Automobilbereich Verwendung. Aufgrund des bestimmungsgemäßen Einsatzes werden diese Bauteile mit hohen Drücken und hohen Temperaturen belastet. Daher ist ein typischer Schlauch aus mindestens zwei Schichten aufgebaut und verfügt zwischen den Schichten über mindestens einen Druckträger. Der Druckträger kann aus einem Geflecht oder einem gestrickten Garn bestehen. Die Schichten vor und hinter dem Druckträger sind in der Regel verbunden, um eine möglichst hohe Dauerfestigkeit des Schlauches zu erzielen.

Ladeluftschläuche mit einem eingebetteten Druckträger sind aus dem Stand der Technik bekannt. So zeigt die DE 20 2004 018 301 einen Ladeluftschlauch zur Verbindung des Ansaugtraktes mit dem Turbolader und Ladeluftkühler, dessen Gewebeeinlage gegenüber der Wandung beweglich ist. Dadurch wird erreicht, dass bei schwingender Belastung eine geringere Reibung entsteht. Gleichzeitig kann das Gewebe sich in einem gewissen Rahmen verlagern, so dass gefährliche Druckspitzen vermieden werden können.

Obwohl deutliche Verbesserungen hinsichtlich der Lebensdauer festgestellt wurden, hat sich gezeigt, dass diese Maßnahmen noch nicht ausreichend sind, um die Lebensdauer auf ein zukunftssicheres Niveau zu bringen. Trotz dieses konstruktiven Aufbaus und aller Qualitätsmaßnahmen kommt es immer wieder zu Schäden an den Ladeluftschläuchen. Die zunehmenden Ladeluftdrücke sowie die gestiegenen Temperaturen in den Schläuchen als auch im Motorraum selbst, erzeugen stetig größere Belastungen.

Es ist daher die Aufgabe der vorliegenden Erfindung, einen Hochdruckschlauch weiterzuentwickeln, der unter den oben genannten Betriebszuständen eine größere Lebensdauer aufweist als herkömmliche Hochdruckschläuche.

Zur Lösung der vorstehend genannten Aufgabe stellt die Erfindung einen Schlauch zur Förderung von mit Druck beaufschlagten Medien bereit, der aus einem textilen Druckträger und einem Schlauchprofil mit zumindest einer entlang einer Schlauchachse verlaufenden Rinne zur abschnittsweisen Aufnahme des textilen Druckträgers hergestellt ist. Als "Rinne" im Sinne der Erfindung wird eine Vertiefung in der Schlauchprofilwand oder ein Zwischenraum zwischen zwei radialen Vorsprüngen der Schlauchprofilwand verstanden. Der Begriff "entlang der Schlauchachse" ist so zu verstehen, dass die Rinne zumindest abschnittsweise parallel und/oder zumindest abschnittsweise schrauben- oder schleifenförmig um die Schlauchachse verlaufen kann. Naturgemäß weist der textile Druckträger Kreuzungspunkte der ihn bildenden Fasern oder Garne auf, insbesondere im Bereich von Knoten und Maschen. Solche Kreuzungspunkte, Knoten und Maschen, können in der entlang der Schlauchachse verlaufenden Rinne zur abschnittsweisen Aufnahme des textilen Druckträgers aufgenommen werden, so dass der textile Druckträger präzise gegenüber dem Schlauchprofil positioniert werden kann. Dadurch kann eine die Lebensdauer beeinträchtigende Verdrehung des Druckträgers gegenüber dem Schlauchprofil, vor allem unter Dauerbeanspruchung des Schlauchs und damit einhergehender Relativbewegung des Druckträgers gegenüber dem Schlauchprofil, verhindert werden. Bei einem mehrschichtigen Schlauchaufbau kann gewährleistet werden, dass das Schlauchprofil einen direkten Kontakt zu einer auf der anderen Seite des Druckträgers angeordneten Schicht des Schlauchs aufweist. Die Kreuzungspunkte, die als Abschnitte des Druckträgers mit größerer radialer Ausdehnung bei einem herkömmlichen Mehrschichtschlauch einen unmittelbaren Kontakt benachbarter Schichten erschweren, können nach der erfindungsgemäßen Lösung in der bereit gestellten Rinne aufgenommen werden.

Es kann sich als vorteilhaft erweisen, wenn das Schlauchprofil im Querschnitt gesehen eine wellen- oder sternförmige Profilierung aufweist. Die wellen- oder sternförmige Profilierung umfasst im Querschnitt gesehen eine Vielzahl von benachbarten Profilbergen und Profiltälern, die vorzugsweise regelmäßig um den Umfang des Schlauchprofils angeordnet sind und vorzugsweise im wesentlichen parallel zueinander und zumindest abschnittsweise parallel zur Schlauchachse und/oder zumindest abschnittsweise schrauben- oder schleifenförmig um die Schlauchachse verlaufen. Als wellenförmig wird eine Profilierung bezeichnet, bei welcher die Konturen der Profilberge und -täler abgerundet sind, während die Konturen der Profilberge und -täler bei der sternförmigen Profilierung mehr oder weniger winkelig oder kantig ausgebildet sind. Die Profiltäler bilden Rinnen zur abschnittsweisen Aufnahme des textilen Druckträgers. Bei einer maschinellen Fertigung des Druckträger liegen die zuvor genannten Kreuzungspunkte, Knoten oder Maschen üblicherweise in einer regelmäßigen Anordnung bzw. in einem regelmäßigen Muster vor. Diese Kreuzungspunkte, Knoten oder Maschen können in der wellen- oder sternförmigen Profilierung des Schlauchprofils angeordnet werden, so dass der textile Druckträger präzise um den Umfang des Schlauchprofils positioniert werden kann.

In einer vorteilhaften Weiterbildung der Erfindung fixiert die Profilierung den Druckträger in Umfangsrichtung des Schlauchs formschlüssig. Dies erfolgt vorzugsweise dadurch, dass der auf dem Schlauchprofil angeordnete Druckträger zumindest geringfügig unter Spannung steht, so dass der Druckträger eng und konturnah am Schlauchprofil anliegt, wobei einer oder mehrere der zuvor genannten Kreuzungspunkte, Knoten oder Maschen in der Rinne liegt/liegen. Dadurch kann verhindert werden, dass sich der Druckträger auch unter Dauerbeanspruchung ungewollt gegenüber dem Schlauchprofil verdreht.

Es kann sich als hilfreich erweisen, wenn die Profilierung an einer dem Druckträger zugewandten Seite des Extrusionsprofils, vorzugsweise an einem Innenumfang und/oder einem Außenumfang des Extrusionsprofils, ausgebildet ist. Beispielsweise kann die gesamte Schlauchprofilwand eine wellen- oder sternförmige Profilierung bei im wesentlichen einheitlicher Wandstärke aufweisen. Durch diese Profilierung kann ein Druckträger sowohl innenseitig als auch außenseitig des Schlauchprofils präzise positioniert und festgelegt werden. Zusätzlich kann durch diese Profilierung die Knickbeständigkeit des Schlauchprofils erhöht werden.

In einer vorteilhaften Weiterbildung der Erfindung weist der Druckträger zumindest einen verdickten Abschnitt auf, wobei der verdickte Abschnitt in der Rinne angeordnet ist. Bei einer maschinellen Fertigung des Druckträger wiederholen sich die zuvor genannten Kreuzungspunkte, Knoten oder Maschen üblicherweise in einer regelmäßigen Anordnung bzw. in einem regelmäßigen Muster und bilden linienförmige, verdickte Abschnitte, die sich im wesentlichen parallel zu einer Achse des Druckträgers erstrecken. Diese linienförmigen, verdickten Abschnitte sind hervorragend geeignet, um den Druckträger gegenüber dem Schlauchprofil zu positionieren.

Es kann sich als praktisch erweisen, wenn der verdickte Abschnitt eine Vielzahl von Knoten, Maschen oder Kreuzungspunkten aufweist.

In einer vorteilhaften Weiterbildung der Erfindung ist der Druckträger gestrickt und weist eine Vielzahl paralleler Maschenstäbchen auf. Ein derartiger Druckträger erweist sich als besonders stabil und belastbar.

Es kann sich als nützlich erweisen, wenn die Anzahl der Rinnen auf die Anzahl der verdickten Abschnitte abgestimmt ist und jeweils ein verdickter Abschnitt in einer Rinne angeordnet ist. Dadurch kann der Druckträger im wesentlichen spielfrei auf dem Schlauchprofil positioniert werden.

In einer vorteilhaften Weiterbildung der Erfindung weist der Schlauch eine Schicht auf, die auf einer von dem Schlauchprofil abgewandten Seite des Druckträgers angeordnet ist. Durch diese mehrschichtige Ausgestaltung des erfindungsgemäßen Schlauchs kann ein für Hochdruckanwendungen hervorragend geeigneter "Hochdruckschlauch" geschaffen werden, bei welchem der Druckträger zwischen den Schichten eingebettet ist. Durch die erfindungsgemäße Ausgestaltung des Schlauchprofils kann auch ein direkter Kontakt zwischen den Schichten bewerkstelligt werden.

Es kann sich als vorteilhaft erweisen, wenn die Schicht mit dem Schlauchprofil stoffschlüssig verbunden ist. Dadurch wird ein stabiler und dauerfester Materialverbund geschaffen. Bei der stoffschlüssigen Verbindung der benachbarten Schichten wird der Druckträger durchsetzt und so unveränderlich gegenüber dem Schlauchprofil und der weiteren Schicht festgelegt.

Es kann sich als günstig erweisen, wenn das Schlauchprofil als Extrusionsprofil ausgebildet ist. Das Schlauchprofil bildet vorzugsweise eine Schlauchseele, während die weitere Schicht vorzugsweise eine Schlauchdecke bildet.

Ein bevorzugter Aspekt der Erfindung betrifft einen Bausatz zur Herstellung eines Schlauchs zur Förderung von mit Druck beaufschlagten Medien, umfassend einen textilen Druckträger und ein Schlauchprofil mit zumindest einer entlang einer Schlauchachse verlaufenden Rinne zur abschnittsweisen Aufnahme des textilen Druckträgers. Dabei ist die Rinne bereits vor dem Aufbringen des textilen Druckträgers vorhanden und kann folglich zur Positionierung des textilen Druckträgers gegenüber dem Schlauchprofil genutzt werden.

Ein weiterer bevorzugter Aspekt der Erfindung betrifft ein Verfahren zur Herstellung eines mehrschichtigen Schlauchs mit einem textilen Druckträger, umfassend die Schritte:
- Bereitstellen eines Schlauchprofils mit zumindest einer entlang einer Schlauchachse verlaufenden Rinne zur abschnittsweisen Aufnahme eines textilen Druckträgers,
- Aufbringen des textilen Druckträgers auf das Schlauchprofil, so dass der textile Druckträger abschnittsweise in der Rinne aufgenommen ist.

Noch ein weiterer bevorzugter Aspekt der Erfindung betrifft eine Vorrichtung zur Herstellung eines Schlauchprofils mit zumindest einer entlang einer Schlauchachse verlaufenden Rinne zur abschnittsweisen Aufnahme eines textilen Druckträgers, wobei die Vorrichtung einen Extrusionskopf mit wellen- oder sternförmig profilierter Austrittsöffnung aufweist. Unter Verwendung eines derartigen Werkzeugs lässt sich das erfindungsgemäße Schlauchprofil besonders einfach und kostengünstig herstellen.

Die bevorzugte Ausführung und Anwendung der Erfindung wird nachstehend mit Bezug auf die Zeichnungen im Detail erläutert.

### Kurze Beschreibung der Zeichnungen

- Figur 1: zeigt eine perspektivische und schematische Ansicht eines erfindungsgemäßen Ladeluftschlauchs zur Darstellung des Schichtaufbaus.
- Figur 2: zeigt eine schematische Schnittansicht eines erfindungsgemäßen Ladeluftschlauchs.
- Figur 3: zeigt eine perspektivische Ansicht eines Extrusionskopfs mit wellen- oder sternförmig profilierter Austrittsöffnung.

### Detaillierte Beschreibung des bevorzugten Ausführungsbeispiels

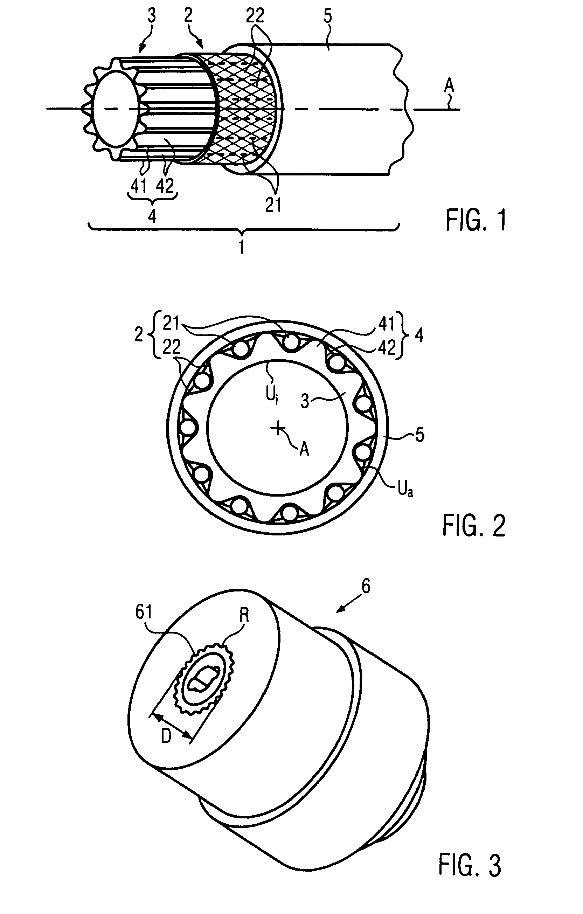

Figur 1 zeigt eine perspektivische und schematische Ansicht zur Darstellung des Schichtaufbaus eines erfindungsgemäßen Schlauchs 1 zur Förderung von mit Druck beaufschlagten Medien. Der Schlauch 1 ist als Hochdruckschlauch ausgebildet und wird vorzugsweise als Ladeluftschlauch im Automobilbereich eingesetzt. Der Einfachheit halber wird ein Schlauch 1 dargestellt, bei welchem sich die Schlauchachse A entlang einer geraden Linie erstreckt. Die Schlauchachse A kann aber auch in einer oder mehreren Ebenen gekrümmt sein. Eine schematische Schnittansicht des erfindungsgemäßen Ladeluftschlauchs 1 ist in Figur 2 zu erkennen. Die Darstellungen der Figuren 1 und 2 sind lediglich schematisch zu verstehen und geben nicht zwingend die realen Größenverhältnisse wieder.

Der erfindungsgemäße Ladeluftschlauch 1 umfasst, von innen nach außen, ein Schlauchprofil 3 als Schlauchseele mit einer im Querschnitt gesehen wellen- oder sternförmigen Profilierung 4, einen textilen Druckträger 2 und eine weitere Schicht 5 als Schlauchdecke.

Das Schlauchprofil 3 ist ein Extrusionsprofil aus einem elastomeren Material. Im Querschnitt gesehen ist ein Außenumfang Ua des Schlauchprofils 3 wellenförmig profiliert, während der Innenumfang Ui des Schlauchprofils 3 im wesentlichen kreisrund ausgebildet ist. Die wellenförmige Profilierung 4 am Außenumfang Ua des Schlauchprofils 3 umfasst eine Vielzahl von benachbarten Profilbergen 41 und Profiltälern 42, wobei die Profiltäler die Rinnen 42 zur abschnittsweisen Aufnahme des textilen Druckträgers 2 bilden. Die Profilberge 41 und -täler 42 erstrecken sich im vorliegenden Fall parallel zueinander sowie parallel zur Schlauchachse A.

Der textile Druckträger 2 ist im vorliegenden Ausführungsbeispiel ein Gestrickschlauch, der eine Vielzahl paralleler Maschenstäbchen 21 und die Maschenstäbchen 21 verbindende Verbindungsabschnitte 22 umfasst. Die Maschenstäbchen 21, die in Figur 1 symbolisch durch gestrichelte Linien und in Figur 2 symbolisch durch Kreise dargestellt sind, sind in regelmäßigen Abständen um den Umfang des Druckträgers 2 angeordnet. Im Bereich der Maschenstäbchen 21 greifen die Fasern oder Garne des textilen Druckträgers 2 ineinander und überkreuzen sich, wobei sich linienförmige, verdickte Abschnitte 21 im Sinne der Erfindung ergeben.

Jeweils einer der verdickten Abschnitte 21 des Druckträgers 2 ist in einer der Rinnen 42 der Profilierung 4 des Schlauchprofils 3 aufgenommen, während sich jeweils einer der Verbindungsabschnitte 22 des Druckträgers 2 über einen der Profilberge 41 erstreckt. Der Druckträger 2 steht geringfügig unter Spannung und befindet sich konturnah in Anlage an dem Schlauchprofil 3, wobei der Druckträger 2 durch die Profilierung 4 in Umfangsrichtung des Schlauchs 1 formschlüssig fixiert ist.

Die auf einer von dem Schlauchprofil 3 abgewandten Seite des Druckträgers 2 angeordnete Schicht 5 ist aus einem elastomeren Material gefertigt und ist im Bereich der Profilberge 41 der Profilierung 4 stoffschlüssig mit dem Schlauchprofil 3 verbunden. Die verdickten Abschnitte 21 des Druckträgers 2 sind in Räumen zwischen den Profiltälern 42 und der Schicht 5 angeordnet.

Die bevorzugte Herstellungsweise und Anwendung des erfindungsgemäßen Ladeluftschlauchs 1 wird nachstehend beschrieben:

Zur Herstellung des erfindungsgemäßen Ladeluftschlauchs 1 stellt die Erfindung einen Bausatz bereit, welcher einen textilen Druckträger 2 und ein Schlauchprofil 3 mit zumindest einer entlang einer Schlauchachse verlaufenden Rinne 42 zur abschnittsweisen Aufnahme des textilen Druckträgers 2 umfasst. Der textile Druckträger 2 und das Schlauchprofil 3 können mit sämtlichen der zuvor genannten Merkmale ausgestattet werden.

Das Verfahren zur Herstellung des erfindungsgemäßen Ladeluftschlauchs 1 umfasst die Schritte:
- Bereitstellen eines Schlauchprofils 3 mit zumindest einer entlang einer Schlauchachse verlaufenden Rinne 42 zur abschnittsweisen Aufnahme eines textilen Druckträgers 2, und
- Aufbringen des textilen Druckträgers 2 auf das Schlauchprofil 3, so dass der textile Druckträgers 2 abschnittsweise in der Rinne 42 aufgenommen ist.

Die Schritte des Verfahrens sowie ein Extrusionskopf 6, der bei der Herstellung des erfindungsgemäßen Schlauchprofils 3 Verwendung findet, werden nachstehend mit Bezug auf die Zeichnungen erläutert:

Das bevorzugte Ausführungsbeispiel der Erfindung sieht einen Schlauchaufbau aus vorzugsweise mindestens zwei elastomeren Schichten 3, 5 vor. Das Schlauchprofil 3, welches die innere Schicht 3 (Seele) bildet, wird mit einem speziell angefertigten Extrusionswerkzeug wellen- oder sternförmig profiliert ausgeführt.

Figur 3 zeigt eine perspektivische Ansicht eines Extrusionskopfs 6 mit wellen- oder sternförmig profilierter Austrittsöffnung 61. Dieser Extrusionskopf 6 gehört zu der erfindungsgemäßen Vorrichtung zur Herstellung des erfindungsgemäßen Schlauchprofils 3. Eine wellenförmige Profilierung ist am Außenumfang der Austrittsöffnung 61 derart ausgebildet, dass das erzeugte Extrusionsprofil insgesamt 24 regelmäßig um den Umfang verteilte Profilberge und -täler aufweist. Ein Krümmungsradius R im Bereich der Profilberge und -täler beträgt ca. 2,4 mm bei einem maximalen Außendurchmesser D der Austrittsöffnung 61 von ca. 46 mm. Ein Innenumfang der Austrittsöffnung 61 ist im wesentlichen kreisrund.

Der textile Druckträger 2 wird "In-line" aufgestrickt, wobei die Anzahl der Profilberge und - täler 41, 42 der Profilierung mit der Anzahl der Stricknadeln für den Druckträger 2 korrespondiert. Die Knotenreihen 21 des Druckträgers 2 legen sich bei der "In-line" Produktion in die Profiltäler 42. Dadurch ist gewährleistet, dass die beiden elastomeren Schichten 3, 5 (Seele und Decke) einen direkten Kontakt zueinander haben. Die Geometrie der einzelnen Profilberge und -täler 41, 42 (bzw. Längsrillen und Erhebungen) wird zum einen durch die Extrusionstechnik selber bestimmt, zum anderen aber auch durch die verwendete Knotenart. So ist z.B. ein wellenartiges Profil eher für einen "plain stitch" geeignet, während für den "lock stitch" ein sternartiges Profil Vorteile bieten könnte.

Beim Extrudieren der Decke 5 direkt auf den Druckträger 2 wird ein Vakuum zwischen Decke 5 und Seele 3 angelegt, damit eine qualitativ hochwertige Verbindung entsteht. Der Unterdruck wird in der Regel unmittelbar nach dem Austritt der Seele 3 aus dem Deckenwerkzeug angelegt. Bei der Verwendung der erfindungsgemäßen Seele 3 mit profilierter Oberfläche verlaufen die Knotenbahnen 21 in den Profiltälern 42, so dass beim Anlegen des Unterdrucks zwischen Decke 5 und Seele 3 eine ausreichende Materialmenge unter den Maschen verbleibt.

Aufgrund der Erfindung lassen sich die folgenden Vorteile erzielen:

Werden die Schläuche nach einer konventionellen Methode hergestellt, so bildet sich jede Oberflächenstruktur auf der Seele als Negativ im Inneren der Seele ab. Bildlich ist es ein Vakuumtiefziehen. Dies hat zur Folge, dass die radialen Maschen der Verstärkungseinlage die dünnste Stelle am Schlauchrohling darstellen. Zu erkennen sind diese Bereiche im Inneren der Seele als sogenannte Strickriefen, die sich axial über die gesamte Schlauchlänge erstrecken. Diese Strickriefen stellen potentielle Bruchstellen bei permanenter Belastung dar.

Durch die Erfindung werden diese Strickriefen und damit die potentielle Bruchstellen eines herkömmlichen Hochdruckschlauchs vermieden.

Ein weiterer positiver Effekt ist die Tatsache, dass durch die Profilierung 4 das Flächenträgheitsmoment der Seele 3 größer ist als beim herkömmlichen Kreisringquerschnitt. Dadurch biegt sich die Seele 3 im Bereich der Fertigungsstrecke auf den nicht gestützten Abschnitten weniger durch und es lassen sich eine deutlich bessere Produktqualität als auch Prozessstabilität erzielen.

Bei der Extrusion mit einem NIR - Ofen kommt es zu besseren Trennfestigkeitswerten, da sich die axial verlaufenden Strickknoten 21 nicht mehr wie herkömmlich glatt auf der Seelenoberfläche befinden, sondern im Profiltal 42. Dadurch ist mit einer wesentlich besseren Lagenbindung zwischen Seele 3 und Decke 5 zu rechnen. Der Profilberg 41 der Seele 3 hat einen direkten Kontakt zur Decke 5.

## Patentansprüche

1. Schlauch (1) zur Förderung von mit Druck beaufschlagten Medien, der aus einem textilen Druckträger (2) und einem Schlauchprofil (3) mit zumindest einer entlang einer Schlauchachse (A) verlaufenden Rinne (42) zur abschnittsweisen Aufnahme des textilen Druckträgers (2) hergestellt ist.

2. Schlauch (1) nach Anspruch 1, **dadurch gekennzeichnet, dass** Schlauchprofil (3) im Querschnitt gesehen eine wellen- oder sternförmige Profilierung (4) mit einer Vielzahl von Rinnen (42) zur abschnittsweisen Aufnahme des Druckträgers (2) aufweist.

3. Schlauch (1) nach einem der vorangegangenen Ansprüche, **dadurch gekennzeichnet, dass** die Profilierung (4) den Druckträger (2) in Umfangsrichtung des Schlauchs (1) formschlüssig fixiert.

4. Schlauch (1) nach einem der vorangegangenen Ansprüche, **dadurch gekennzeichnet, dass** die Profilierung (4) an einer dem Druckträger (2) zugewandten Seite des Extrusionsprofils (3), vorzugsweise an einem Innenumfang (Ui) und/oder einem Außenumfang (Ua) des Extrusionsprofils (3), ausgebildet ist.

5. Schlauch (1) nach einem der vorangegangenen Ansprüche, **dadurch gekennzeichnet, dass** die Profilierung (4) im Querschnitt gesehen eine Vielzahl von benachbarten Profilbergen (41) und Profiltälern (42) aufweist.

6. Schlauch (1) nach einem der vorangegangenen Ansprüche, **dadurch gekennzeichnet, dass** der Druckträger (2) zumindest einen verdickten Abschnitt (21) aufweist, wobei der verdickte Abschnitt (21) in der Rinne (42) angeordnet ist.

7. Schlauch (1) nach einem der vorangegangenen Ansprüche, **dadurch gekennzeichnet, dass** der verdickte Abschnitt (21) eine Vielzahl von Knoten, Maschen oder Kreuzungspunkten aufweist.

8. Schlauch (1) nach einem der vorangegangenen Ansprüche, **dadurch gekennzeichnet, dass** der Druckträger (2) gestrickt ist und eine Vielzahl paralleler Maschenstäbchen aufweist.

9. Schlauch (1) nach einem der vorangegangenen Ansprüche, **dadurch gekennzeichnet, dass** die Anzahl der Rinnen (42) auf die Anzahl der verdickten Abschnitte (21) abgestimmt ist und jeweils ein verdickter Abschnitt (21) in einer Rinne (42) angeordnet ist.

10. Schlauch (1) nach einem der vorangegangenen Ansprüche, **dadurch gekennzeichnet, dass** der Schlauch (1) eine Schicht (5) aufweist, die auf einer von dem Schlauchprofil (3) abgewandten Seite des Druckträgers (2) angeordnet ist.

11. Schlauch (1) nach einem der vorangegangenen Ansprüche, **dadurch gekennzeichnet, dass** die Schicht (5) mit dem Schlauchprofil (3) stoffschlüssig verbunden ist.

12. Schlauch (1) nach einem der vorangegangenen Ansprüche, **dadurch gekennzeichnet, dass** das Schlauchprofil (3) als Extrusionsprofil ausgebildet ist.

13. Bausatz zur Herstellung eines Schlauchs (1) zur Förderung von mit Druck beaufschlagten Medien, umfassend einen textilen Druckträger (2) und ein Schlauchprofil (3) mit zumindest einer entlang einer Schlauchachse verlaufenden Rinne (42) zur abschnittsweisen Aufnahme des textilen Druckträgers (2).

14. Verfahren zur Herstellung eines mehrschichtigen Schlauchs mit einem textilen Druckträger (2), umfassend die Schritte:
a. Bereitstellen eines Schlauchprofils (3) mit zumindest einer entlang einer Schlauchachse verlaufenden Rinne (42) zur abschnittsweisen Aufnahme eines textilen Druckträgers (2),
b. Aufbringen des textilen Druckträgers (2) auf das Schlauchprofil (3), so dass der textile Druckträger (2) abschnittsweise in der Rinne (42) aufgenommen ist.

15. Vorrichtung zur Herstellung eines Schlauchprofils mit zumindest einer entlang einer Schlauchachse verlaufenden Rinne zur abschnittsweisen Aufnahme eines textilen Druckträgers, **dadurch gekennzeichnet, dass** die Vorrichtung einen Extrusionskopf (6) mit wellen- oder sternförmig profilierter Austrittsöffnung (61) aufweist.
